**Europäisches Patentamt**

**European Patent Office**

**Office européen des brevets**

(11) Veröffentlichungsnummer: **0 313 927 B1**

## EUROPÄISCHE PATENTSCHRIFT

(45) Veröffentlichungstag der Patentschrift:
15.05.91 Patentblatt 91/20

(51) Int. Cl.⁵: **F16B 35/04, B21H 3/02**

(21) Anmeldenummer: **88116982.5**

(22) Anmeldetag: **13.10.88**

(54) **Dehnschraube mit Passbund.**

(30) Priorität: **28.10.87 DE 8714334 U**

(43) Veröffentlichungstag der Anmeldung:
**03.05.89 Patentblatt 89/18**

(45) Bekanntmachung des Hinweises auf die
Patenterteilung:
**15.05.91 Patentblatt 91/20**

(84) Benannte Vertragsstaaten:
**DE ES IT NL SE**

(56) Entgegenhaltungen:
**EP-A- 0 090 453**
**EP-A- 0 206 190**
**DE-A- 2 143 784**
**DE-U- 8 714 334**

(73) Patentinhaber: **RICHARD BERGNER GMBH & CO**
**Bahnhofstrasse 8-16**
**W-8540 Schwabach (DE)**

(72) Erfinder: **Thomala, Wolfgang, Dr.-Ing.**
**Rhönstrasse 16a**
**W-8540 Rednitzhembach (DE)**

(74) Vertreter: **Tergau, Enno et al**
**Patentanwälte Tergau & Pohl Postfach 11 93**
**47 Hefnersplatz 3**
**W-8500 Nürnberg 11 (DE)**

**Beschreibung**

Die Erfindung betrifft eine Dehnschraube mit spanlos angeformtem, aus Walsten und Rillen bestehendem Dehn- und Paßbereich und mit Befestigungsgewinde.

Dehnschrauben sind dazu bestimmt, mit großer Vorspannkraft angezogen zu werden, um bei den miteinander verschraubten Teilen, z.B. den Lagerteilen von Pleuelstangen, unter Betriebsbeanspruchung ein wesentliches Aufklaffen der Teilfuge zu vermeiden. Zur Erzielung der gewünscht großen Vorspannkraft werden solche Dehnschrauben über ihren elastischen Grenzbereich in den plastischen Bereich hinein verformt. Dazu erfolgt das Anziehen der Dehnschrauben drehwinkel- oder streckgrenzgesteuert. Bei Pleuelstangen sind besonders hohe Vorspannkräfte deswegen erwünscht, weil eine exzentrische Betriebsbeanspruchung der Schrauben vorliegt. Es ist bekannt, Dehnschrauben dadurch herzustellen, daß der Schaftdurchmesser zerspanend auf bis zu ca. 90% des Kerndurchmessers des Befestigungsgewindes reduziert wird. Die zerspanende Bearbeitung der Dehnschrauben ist jedoch kostenintensiv.

Es ist weiterhin bekannt, zur Vermeidung der zerspanenden Herstellung des Dehnbereiches einer Dehnschraube den Dehnschaft spanlos durch eine partielle Durchmesserreduzierung in Form einer Rillung herzustellen. Diese Rillung muß nicht die Form von die Achse der Dehnschraube konzentrisch umgebenden Ringnuten aufweisen. Sie kann auch in Gewindeform aufgebracht sein. Der wirksame Dehndurchmesser ist dann der Kerndurchmesser der Rillen.

Des weiteren ist es für bestimmte Anwendungsfälle erwünscht, solche Dehnschrauben mit einem Paßbund zu versehen. Der Paßbund hat die Aufgabe, die beiden durch die Dehnschraube miteinander zu verspannenden Teile genau zentriert in einer gewollten Deckungsstellung miteinander zu halten. Bei der Schraubverbindung erstreckt sich der Paßbund beidseitig der Teilfuge in beide miteinander zu verbindenden Teile hinein. Er muß notwendigerweise einen Außendurchmesser aufweisen, welcher größer ist als der Nenn- bzw.

Außendurchmesser des Befestigungsgewindes. Seine Passungstoleranz muß gering sein, um die gewollte Zentrierfunktion gewährleisten zu können.

Bei einer aus DE-A-21 43 784 bekannten Dehnschraube der eingangs genannten Art ist der Paßbereich durch eine Reduzierung des Kerndurchmessers der Rillen des Dehnbereichs hergestellt. Diese Durchmesserreduzierung bewirkt eine stärkere Verdrängung des Werkstoffes aus dem Bereich des Kerndurchmessers. Der verdrängte Werkstoff steigt im Bereich der Ringwulste in Radialrichtung nach außen auf und bewirkt dort eine Vergrößerung des Außendurchmessers der Ringwulste. Die Ringwulste werden dann abschließend durch Walzen oder Schleifen auf den Paßdurchmesser reduziert, was problemlos innerhalb enger Toleranzen möglich ist. Damit wird spanende Bearbeitung minimiert oder vollständig vermieden.

Die aus DE-A-21 43 784 bekannte Dehnschraube der eingangs genannten Art hat indessen den Nachteil, daß der geringste Durchmesser der Dehnschraube im Bereich des Paßbereiches liegt. Der Dehnbereich ist mit dem Paßbereich identisch, bzw. Teil des Paßbereiches. Es tritt dann bei Einwirkung der gewollt großen Vorspannkraft gerade bevorzugt im Bereich des Paßbereiches die Schraubendehnung auf. Diese in Achsrichtung wirksame Dehnung führt indessen zwangsläufig zu einer Reduzierung des Außendurchmessers der Ringwulste und damit des Außendurchmessers des Paßbereiches, da die Kopfflächen der Ringwulste die wirksamen Umfangsflächen und damit den als Passungsteil wirksamen Außendurchmesser des Paßbundes bilden. Durch die bei Längsdehnung zwangsläufig im Paßbereich eintretende Querkontraktion der Dehnschraube verliert also der Paßbereich sein Paßfunktion. Bei den eingangs beschriebenen, modernen Anziehverfahren von Dehnschrauben, die dadurch überelastisch verformt werden, kann dies die Wiederverwendbarkeit der Dehnschraube fraglich machen.

Bekannt is nach EP-A-0 090 453 eine Schraube mit den verschieden gerillten Bereichen Befestigungsgewinde, Paßbereich und Führungsbereich unter dem Kopf. Der Führungsbereich wird in das Schraubenloch bei der Montage eingepreßt und verhindert so beim Ausdrehen z.B. einer Mutter sowohl ein axiales Auspressen wie ein Verdrehen des Schaubenbolzens. Ein Dehnschaft, auch nicht in gerillter Form, existiert bei dieser Schraube nicht. Es handelt sich also nicht um eine Dehnschraube.

Der Erfindung liegt die Aufgabe zugrunde, Dehnschrauben herzustellen, bei deren Paßbereich bei einer Verformung der Dehnschraube in den überelastischen Bereich hinein keine plastische Querkontraktion auftritt, also keine plastische Durchmesserreduzierung eintritt. Diese Aufgabe wird durch die Kennzeichnungsmerkmale des Anspruches 1 gelöst.

Erfindungsgemäß wird also der Paßbereich aus dem Dehnbereich der Dehnschraube hinausverlegt. Paßbereich und Dehnbereich sind an verschiedenen Stellen des Schraubenschaftes realisiert. Durch die Differenz zwischen dem Kerndurchmesser der Rillen des Paßbereiches und dem der Rillen des Dehnbereiches ist sichergestellt, daß bei der gewollt überelastischen Dehnung des Dehnbereiches die Dehnung des Paßbereiches im elastischen Verformungsbereich bleibt.

Vorteilhafterweise ist der Kerndurchmesser der Rillen des Paßbereiches mindestens 10% größer als der Kerndurchmesser der Rillen des Dehnbereiches. Aus konstruktiven Gründen ist der Paßbereich zweckmäßig zwischen dem Befestigungsgewinde und dem Dehnbereich angeordnet.

Aus fertigungstechnischen Gründen weicht zweckmäßigerweise das Oberflächenprofil des Paßbereiches von dem des Dehnbereiches ab. Dem liegt folgende Überlegung zugrunde :

Im Endzustand weist der Schaft der Dehnschraube im Bereich des Paßbereiches seinen größten Durchmesser auf. Der Außendurchmesser des Paßbereiches ist größer als der des Dehnbereiches und vor allen Dingen größer als der des Befestigungsgewindes. Diese Durchmesservergrößerung kann am Schraubenrohling (vor dem Walzprozeß) beliebig hergestellt werden, z.B. durch Stauchung im Paßbereich oder auch durch Reduzierung des Drahtdurchmessers im Bereich des Befestigungsgewindes. Besonders vorteilhaft ist es jedoch, die Durchmesservergrößerung durch axiale Verdrängung des Drahtwerkstoffes aus dem Bereich der Rillen des Paßbereiches in den Bereich seiner Wulste herzustellen. Deren Köpfe steigen radial nach außen auf und bewirken die gewünschte Durchmesservergrößerung. So kann z.B. eine Vergrößerung des Axialabstandes zwischen zwei benachbarten Wulsten, nämlich durch eine Vergrößerung der Rillenbreite ohne eine ins Gewicht fallende Durchmesserreduzierung im Kernbereich, das notwendige Paßmaß des Paßbereiches hergestellt werden. Dadurch wird auch die zur spanlosen Formgebung des Paßbereiches erforderliche Verformungsarbeit minimiert. In diesem Sinne führen die Merkmale der Ansprüche 5 bis 8 zu einem besonders vorteilhaften Querschnittsprofil des Paßbereiches, ohne damit den Bereich derjenigen Profilformen einzuschränken, die im Rahmen der vorstehenden Überlegungen liegen. Zur spanlosen Herstellung des Paßdurchmessers durch Walzen gemäß Anspruch 9 ist es zweckmäßig, die Ringwulste im Paßbereich mit einer kammzinkenartigen Querschnittsform zu versehen.

Der Erfindungsgegenstand wird anhand eines in den Figuren dargestellten Ausführungsbeispiels näher erläutert. Es zeigen :

Fig. 1 eine Seitenansicht der Dehnschraube,
Fig. 2 eine Kopf-Draufsicht entsprechend Pfeil II in Fig. 1,
Fig. 3 eine vergrößerte Darstellung des Profils des Dehnbereiches im Ausschnitt III von Fig. 1,
Fig. 4 eine vergrößerte Darstellung des Profils des Paßbereiches im Bereich des Ausschnittes IV von Fig. 1.

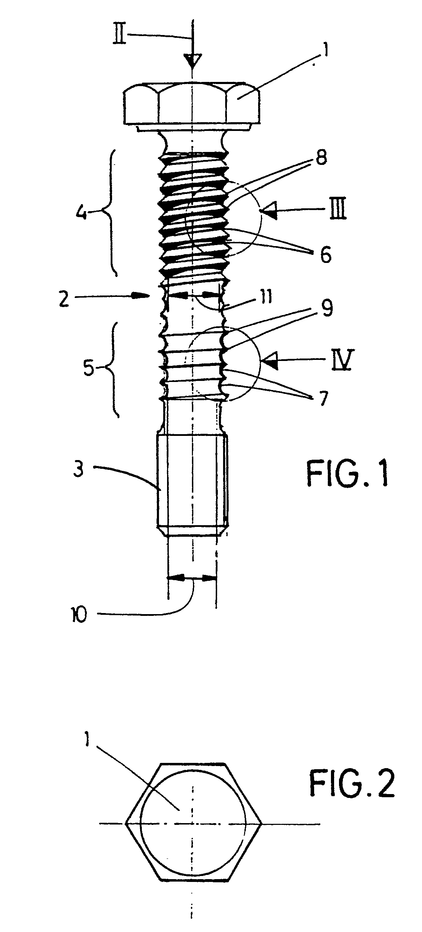

Die Dehnschraube gemäß Fig. 1 besteht im wesentlichen aus dem Kopf 1 und dem insgesamt mit 2 bezeichneten Schaft. Der Schaft 2 weist an seinem dem Kopf 1 abgewandten Ende das Befestigungsgewinde 3 auf. Des weiteren sind auf dem Schaft 2 zwischen Kopf 1 und Befestigungsgewinde 3 an der dem Kopf 1 zugewandten Seite der Dehnbereich 4 und an der dem Befestigungsgewinde 3 zugewandten Seite der Paßbereich 5 angeordnet.

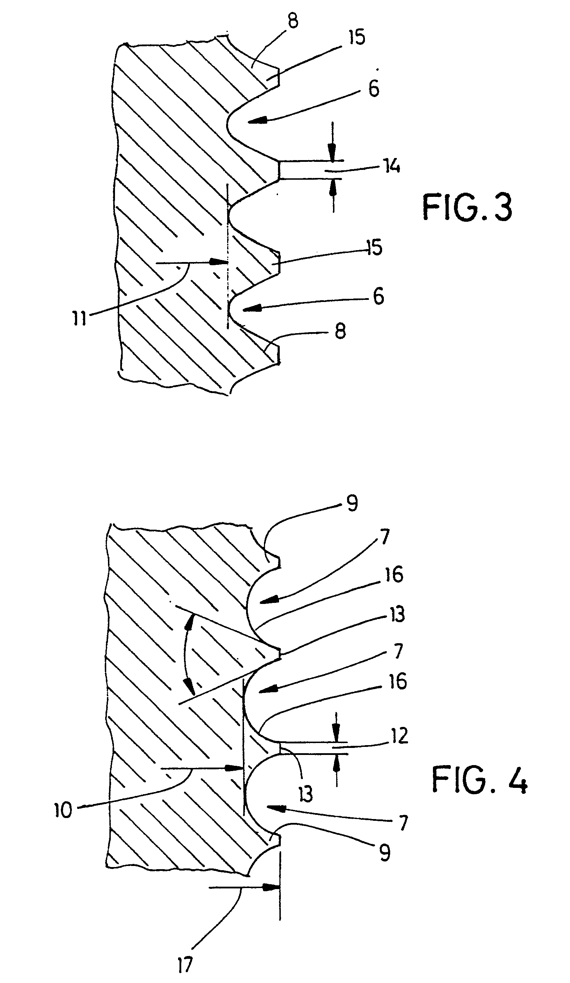

Das Profil sowohl des Dehnbereiches 4 (Fig. 3) als auch das Profil des Paßbereiches 5 (Fig. 4) sind durch nebeneinanderliegende Rillen 6 bzw. 7 und durch dazwischenliegende Wulste 8 bzw. 9 gebildet. Die Rillen 6, 7 und Wulste 8, 9 sind spanlos geformt. Der Kerndurchmesser 10 der Rillen 7 des Paßbereiches 5 ist 10% größer als der Kerndurchmesser 11 der Rillen 6 des Dehnbereiches 4. Das Oberflächenprofil des Paßbereiches 5 weicht von dem des Dehnbereiches 4 ab. Die Profilquerschnittsbreite 12 der Wulstköpfe 13 des Paßbereiches 5 ist kleiner als die Profilquerschnittsbreite 14 der Wulstköpfe 15 des Dehnbereiches 4. Vorzugsweise ist sie weniger als halb so groß wie die Profilquerschnittsbreite 14 der Wulstköpfe 15 des Dehnbereiches 4.

Die Rillen 7 des Paßbereiches 5 weisen die Querschnittsform eines Kreisbogenabschnittes auf. Diese Kreisbogenform setzt sich über die Wulstflanken 16 bis in den Bereich der Wulstköpfe 13 des Paßbereiches 5 hinein stetig fort.

Der Paßdurchmesser 17 des Paßbereiches 5 ist durch Walzen spanlos geformt.

Bezugszeichenliste

    1 Kopf
    2 Schaft
    3 Befestigungsgewinde
    4 Dehnbereich
    5 Paßbereich
    6 Rille
    7 Rille
    8 Wulst
    9 Wulst
    10 Kerndurchmesser des Paßbundes
    11 Kerndurchmesser des Dehnbereiches
    12 Profilquerschnittsbreite
    13 Wulstkopf
    14 Profilquerschnittsbreite
    15 Wulstkopf
    16 Wulstflanke
    17 Paßdurchmesser

**Ansprüche**

1. Dehnschraube mit spanlos angeformtem, aus Wulsten und Rillen bestehendem Dehn- und Paßbereich und mit Befestigungsgewinde (3) dadurch gekennzeichnet daß ein Paßbereich (5) und ein Dehnbereich (4) voneinander getrennt angeordnet und verschieden gerillt sind, wobei der Kerndurchmesser (10) der Rillen (7) des Paßbereiches (5) größer ist als der Kerndurchmesser (11) der Rillen (6) des Dehnbereiches (4).

2. Dehnschraube nach Anspruch 1, dadurch gekennzeichnet, daß der Kerndurchmesser der Rillen (7) des Paßbereiches (5) mindestens 10% größer als der Kerndurchmesser (11) der Rillen (6) des Dehnbereiches (4) ist.

3. Dehnschraube nach Anspruch 1 oder 2, dadurch gekennzeichnet, daß der Paßbereich (5) zwischen dem Befestigungsgewinde (3) und dem Dehnbereich (4) angeordnet ist.

4. Dehnschraube nach einem oder mehreren der vorhergehenden Ansprüche, dadurch gekennzeichnet, daß das Oberflächenprofil des Paßbereiches (5) von dem Oberflächenprofil des Dehnbereiches (4) abweicht.

5. Dehnschraube nach Anspruch 4, dadurch gekennzeichnet, daß die Profilquerschnittsbreite (12) der Wulstköpfe (13) des Paßbereiches (5) kleiner als die Profilquerschnittsbreite (14) der Wulstköpfe (15) des Dehnbereiches (4) ist.

6. Dehnschraube nach Anspruch 5, dadurch gekennzeichnet, daß die Profilquerschnittsbreite (12) der Wulstköpfe (13) des Paßbereiches (5) weniger als halb so groß wie die Profilquerschnittsbreite (14) der Wulstköpfe (15) des Dehnbereiches (4) ist.

7. Dehnschraube nach einem oder mehreren der vorhergehenden Ansprüche, dadurch gekennzeichnet, daß die Rillen (7) des Paßbereiches (5) die Querschnittsform etwa eines Kreisbogenabschnittes aufweisen.

8. Dehnschraube nach Anspruch 7, dadurch gekennzeichnet, daß sich die Kreisbogenform der Rillen (7) des Paßbereiches (5) stetig über die Wulstflanken (16) bis in den Bereich der Wulstköpfe (13) hinein fortsetzt.

9. Dehnschraube nach einem oder mehreren der vorhergehenden Ansprüche, dadurch gekennzeichnet, daß der Paßdurchmesser (17) des Paßbereiches (5) durch Walzen spanlos geformt ist.

## Claims

1. An expansion screw with an expansion and fitting zone formed-on without cutting, consisting of crests and roots, and with a fastening thread (3), characterized in that a fitting zone (5) and an expansion zone (4) are arranged separately from each other and provided with different roots, the minor diameter (10) of the roots (7) of the fitting zone (5) being greater than the minor diameter (11) of the roots (6) of the expansion zone (4).

2. An expansion screw according to claim 1, characterized in that the minor diameter of the roots (7) of the fitting zone (5) is at least 10% larger than the minor diameter (11) of the roots (6) of the expansion zone (4).

3. An expansion screw according to claim 1 or 2, characterized in that the fitting zone (5) is arranged between the fastening thread (3) and the expansion zone (4).

4. An expansion screw according to one or more of the preceding claims, characterized in that the surface profile of the fitting zone (5) is different from the surface profile of the expansion zone (4).

5. An expansion screw according to claim 4, characterized in that the profile cross sectional width of the crest heads (13) of the fitting zone (5) is smaller than the profile cross sectional width (14) of the crest heads (15) of the expansion zone (4).

6. An expansion screw according to claim 5, characterized in that the profile cross sectional width (12) of the crest heads (13) of the fitting zone (5) is less than half the profile cross sectional width (14) of the crest heads (15) of the expansion zone (4).

7. An expansion screw according to one or more of the preceding claims, characterized in that the roots (7) of the fitting zone (5) have the approximate cross sectional shape of a segment of a circular arc.

8. An expansion screw according to claim 7, characterized in that the circular arc shape of the roots (7) of the fitting zone (5) continues steadily via the crest flanks (14) as far as the zone of the crest heads (13).

9. An expansion screw according to one or more of the preceding claims, characterized in that the fitting diameter (17) of the fitting zone (5) is formed by rolling without cutting.

## Revendications

1. Vis allégée comportant un domaine allégé et d'ajustement formé sans enlèvement de copeaux, constitué par des nervures et des rainures, ainsi qu'un filet de fixation (3), caractérisée en ce qu'un domaine d'ajustement (5) et un domaine allégé (4) sont disposés séparément l'un de l'autre et sont rainurés de façon différente, le diamètre (10) du noyau des rainures (7) du domaine d'ajustement (5) étant supérieur au diamètre (11) du noyau des rainures (6) du domaine allégé (4).

2. Vis allégée selon la revendication 1, caractérisée en ce que le diamètre du noyau des rainures (7) du domaine d'ajustement (5) est supérieur d'au moins 10% au diamètre (11) du noyau des rainures (6) du domaine allégé (4).

3. Vis allégée selon la revendication 1 ou 2, caractérisée en ce que le domaine d'ajustement (5) est disposé entre le filet de fixation (3) et le domaine allégé (4).

4. Vis allégée selon une ou plusieurs des revendications précédentes, caractérisée en ce que le profil superficiel du domaine d'ajustement (5) diffère du profil superficiel du domaine allégé (4).

5. Vis allégée selon la revendication 4, caractérisée en ce que la largeur (12) de la section de profil des têtes de nervure (13) du domaine d'ajustement (5) est inférieure à la largeur (14) de la section de profil des têtes de nervure (15) du domaine allégé (4).

6. Vis allégée selon la revendication 5, caractérisée en ce que la largeur (12) de la section de profil des têtes de nervure (13) du domaine d'ajustement (5) est inférieure à la moitié de la largeur (14) de la section de profil des têtes de nervure (15) du domaine allégé (4).

7. Vis allégée selon une ou plusieurs des revendications précédentes, caractérisée en ce que les rainures (7) du domaine d'ajustement (5) présentent sensiblement la forme en section transversale d'un segment d'arc de cercle.

8. Vis allégée selon la revendication 7, caractérisée en ce que la forme en arc de cercle des rainures (7) du domaine d'ajustement (5) se prolonge d'une manière continue jusque dans le domaine des têtes de nervure (13) en passant par les flancs de nervure (16).

9. Vis allégée selon une ou plusieurs des revendications précédentes, caractérisée en ce que le diamètre d'ajustement (17) du domaine d'ajustement (5) est formé sans enlèvement de copeaux par laminage.

FIG. 1

FIG. 2

FIG. 3

FIG. 4